(19) Europäisches Patentamt
European Patent Office
Office européen des brevets

(11) **EP 3 258 331 B1**

## (12) EUROPÄISCHE PATENTSCHRIFT

(45) Veröffentlichungstag und Bekanntmachung des Hinweises auf die Patenterteilung:
**31.12.2025 Patentblatt 2026/01**

(21) Anmeldenummer: **16305737.5**

(22) Anmeldetag: **16.06.2016**

(51) Internationale Patentklassifikation (IPC):
**G05B 19/042** (2006.01)    **H02P 23/14** (2006.01)
**G05B 19/404** (2006.01)

(52) Gemeinsame Patentklassifikation (CPC):
**H02P 23/14; G05B 19/0428; G05B 19/404**

(54) **ÜBERWACHUNG EINER MASCHINE**

MONITORING OF A MACHINE

SURVEILLANCE D'UNE MACHINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.12.2017 Patentblatt 2017/51**

(73) Patentinhaber: **Schneider Electric Industries SAS**
**92500 Rueil-Malmaison (FR)**

(72) Erfinder:
• **Heid, Jürgen**
**97237 Altertheim (DE)**
• **Rieger, Michael**
**97855 Lengfurt (DE)**

(74) Vertreter: **Manitz Finsterwald**
**Patent- und Rechtsanwaltspartnerschaft mbB**
**Martin-Greif-Straße 1**
**80336 München (DE)**

(56) Entgegenhaltungen:
**EP-A2- 0 031 906        WO-A2-2013/158849**
**DE-A1- 102011 121 839    DE-A1- 102012 106 771**
**DE-A1- 4 111 530**

• **JAN BRAUN: "V CC Formelsammlung Formelsammlung Formelsammlung Formelsammlung Formelsammlung Formelsammlung Formelsammlung Formelsammlung Formelsammlung Formelsammlung Formelsammlung Formelsammlung Formelsammlung Formelsammlung Formelsammlung", 5 July 2012 (2012-07-05), XP055306972, Retrieved from the Internet <URL:http://www.maxonmotor.de/medias/sys_master/root/8819062800414/maxon-Formelsammlung-d.pdf?attachment=true> [retrieved on 20160930]**

**Beschreibung**

Die vorliegende Erfindung betrifft ein Verfahren zur Überwachung einer Maschine, bei welcher ein Motor eine Mechanik antreibt.

Bei derartigen Maschinen, bei welchen ein Motor eine Mechanik antreibt, werden insbesondere bei der Einrichtung der Maschine in einer Motorsteuerung Regelparameter festgelegt, welche mechanische Charakteristika der Maschine bzw. der Mechanik angeben. Üblicherweise werden die zugrunde zu legenden Werte geschätzt und/oder anhand von Erfahrungswerten bestimmt.

Nachteiligerweise ist eine solche Einstellung der Maschine, bzw. die Einstellung der Regelparameter für den Antriebsstrang, nicht immer genau. Zudem kann sich das Verhalten der Mechanik im Betrieb verändern, beispielsweise durch Verschleiß oder sich stark ändernde Belastung.

Die ursprünglich eingestellten Werte der Regelparameter können dann nicht mehr gültig sein, so dass es zu Funktionsstörungen oder Überlastungen kommen kann.

Aus der DE 10 2011 121 839 A1 ist ein Verfahren bekannt, bei welchem ein aufgebrachtes Drehmoment gemessen und daraus ein Trägheitsmoment berechnet wird, welches wiederum zur Steuerung eines Antriebs verwendet wird. Die DE 41 11 530 A1 offenbart die Berechnung von Parametern eines Feder-Masse-Systems. Aus der WO 2013/158849 A1 ist ein Verfahren Ermittlung des Trägheitsmoments und der Reibung einer Mechanik bekannt, wobei das Trägheitsmoment und die Reibung mittels einer Testfahrt und Integralberechnung über die Testfahrt bestimmt werden. EP 0 031 906 A2 beschreibt eine Überwachung von Reibung bei einem elektrischen Motor.

Es ist die der Erfindung zugrundeliegende Aufgabe, ein Verfahren anzugeben, mit Veränderungen an der Mechanik zuverlässig erkannt werden können.

Diese Aufgabe wird durch ein Verfahren gemäß Anspruch 1 gelöst.

Die Erfindung geht von der Erkenntnis aus, dass aufgrund der Ermittlung des von dem Motor an die Mechanik abgegebenen Drehmoments und der Ermittlung der Winkelbeschleunigung des Motors das Trägheitsmoment der Mechanik und die Reibung der Mechanik berechnet werden können. Die Berechnung des Trägheitsmoments der Mechanik und der Reibung der Mechanik kann in einer Motorsteuerung durchgeführt werden. Möglichkeiten zur Berechnung werden untenstehend erläutert.

Das von dem Motor an die Mechanik abgegebene Drehmoment wird erfindungsgemäß direkt gemessen. Die Winkelbeschleunigung des Motors kann erfindungsgemäß direkt gemessen werden oder aus einer anderen Messgröße berechnet werden. In jedem Fall liegt der ermittelten Winkelbeschleunigung des Motors bevorzugt eine gemessene Größe zugrunde.

Um die Winkelbeschleunigung des Motors zu ermitteln, kann beispielsweise auch eine Linearbeschleunigung der Mechanik gemessen werden, woraufhin auf die Winkelbeschleunigung des Motors zurückgerechnet werden kann.

Das berechnete Trägheitsmoment der Mechanik und die Reibung der Mechanik basieren somit jeweils auf Messwerten, wodurch eine Einstellung der Motorsteuerung nicht mehr anhand von geschätzten Werten erfolgen muss, sondern auf der Grundlage von Messwerten und damit auf der Grundlage der tatsächlichen mechanischen Eigenschaften der Mechanik erfolgen kann.

Weiterhin ist von Vorteil, dass das erfindungsgemäße Verfahren jederzeit im gesamten Lebenszyklus der Maschine durchgeführt werden kann. Zudem ist das Verfahren unabhängig von der momentanen Drehzahl, Winkelbeschleunigung oder Leistung des Motors, wodurch zur Durchführung des Verfahrens ein "normaler" Betrieb der Maschine nicht unterbrochen werden muss.

Durch das erfindungsgemäße Verfahren können bei der Einrichtung der Maschine initial zu verwendende Parameter bestimmt werden. Hierdurch kann gegebenenfalls eine Dimensionierung des Motors geändert werden, um einen zu der Mechanik passenden Motor zu verwenden. Auch während des regulären Betriebs können die Parameter wiederholt (z.B. in festen Zeitabständen) überprüft und gegebenenfalls geändert werden. Bei einer starken Veränderung der Parameter, nämlich des Trägheitsmoments der Mechanik oder der Reibung der Maschine, das heißt bei einer Änderung, die über einen vorbestimmten Schwellenwert hinausgeht, wird zudem ein Warnsignal ausgegeben, mit welchem eine vorsorgliche Wartung der Maschine veranlasst werden kann.

Das erfindungsgemäße Verfahren ermöglicht es, auf einfache Weise eine höhere Genauigkeit bei der fortlaufenden Bestimmung und Anpassung der mechanischen Parameter einer Maschine gegenüber Verfahren nach dem Stand der Technik zu erreichen.

Vorteilhafte Ausführungsformen der Erfindung sind der Beschreibung, den Zeichnungen sowie den Unteransprüchen zu entnehmen.

Erfindungsgemäß werden das Trägheitsmoment der Mechanik und/oder die Reibung der Mechanik anhand der Formel

$$(1) \qquad M = J * \alpha + M_{mech}$$

berechnet. Wie bereits ausgeführt, bezeichnet M das von dem Motor an die Mechanik abgegebene Drehmoment, J das Trägheitsmoment der Mechanik, $\alpha$ die Winkelbeschleunigung des Motors und $M_{mech}$ die Reibung der Mechanik.

Bei der genannten Formel (1) handelt es sich um eine lineare Geradengleichung mit Achsenabschnitt, die üblicherweise in der Form

$$(2) \qquad y = m * x + t$$

dargestellt wird. Die Steigung (m) entspricht dabei dem Trägheitsmoment (J) der Mechanik und der Achsenabschnitt (t) der Reibung ($M_{mech}$) der Mechanik.

Um sowohl die Steigung als auch den Achsenabschnitt zu bestimmen werden erfindungsgemäß in zumindest zwei verschiedenen Betriebszuständen der Maschine das jeweils von dem Motor an die Mechanik abgegebene Drehmoment und die jeweilige Winkelbeschleunigung des Motors ermittelt. Die Betriebszustände können beliebig gewählt werden. Durch die zumindest zweifache Ermittlung des von dem Motor an die Mechanik abgegebenen Drehmoments und der Winkelbeschleunigung des Motors kann ein Gleichungssystem mit zwei Gleichungen und zwei Unbekannten aufgestellt werden, das gelöst werden kann. Die unbekannten Größen sind dabei das Trägheitsmoment (J) der Mechanik und die Reibung ($M_{mech}$) der Mechanik.

Bevorzugt erfolgt die Ermittlung des von dem Motor an die Mechanik abgegebenen Drehmoments und der Winkelbeschleunigung des Motors derart, dass die ermittelte Winkelbeschleunigung und das ermittelte Drehmoment einander zugeordnet sind, das heißt beispielsweise zum selben Zeitpunkt ermittelt werden und/oder vom selben Betriebszustand stammen. Unter einem Betriebszustand kann insbesondere ein Arbeitspunkt der Maschine verstanden werden, das heißt eine bestimmte Kombination z.B. aus einer Drehfrequenz des Motors, einer Winkelbeschleunigung des Motors und/oder einer Leistungsaufnahme des Motors.

Erfindungsgemäß werden das Trägheitsmoment der Mechanik und/oder die Reibung der Mechanik anhand einer Regressionsanalyse ermittelt, wobei insbesondere in einer Vielzahl verschiedener Betriebszustände das jeweilige von dem Motor an die Mechanik abgegebene Drehmoment und die jeweilige Winkelbeschleunigung des Motors ermittelt werden. Mittels der Vielzahl von Messungen in verschiedenen Betriebszuständen kann eine "Wolke" von Messpunkten in einem Koordinatensystem erzeugt werden, in welchem auf der Abszisse die Winkelbeschleunigung des Motors und auf der Ordinate das von dem Motor an die Mechanik abgegebene Drehmoment aufgetragen sind. Mittels der Regressionsanalyse wird durch die Punktwolke bevorzugt eine Gerade gelegt, von welcher anschließend die Geradengleichung ermittelt wird. Mit der Geradengleichung sind dann, wie oben ausgeführt, das Trägheitsmoment (J) der Mechanik und die Reibung ($M_{mech}$) der Mechanik bekannt.

Zur Messung des von dem Motor aufgenommenen Stroms kann ein Strom eines Umrichters, der mit dem Motor gekoppelt ist, ermittelt oder gemessen werden.

Bei der Messung der vom Motor aufgenommenen Leistung kann anhand einer bekannten Spannung am Motor auf den vom Motor aufgenommenen Strom rückgeschlossen werden. Es versteht sich, dass der Getriebefaktor nur verwendet wird, sofern der Motor über ein, insbesondere direkt, angeschlossenes Getriebe verfügt.

Durch die Messung des vom Motor aufgenommenen Stroms wird der Motor nicht nur zum Antreiben der Mechanik benutzt, sondern dient gleichzeitig auch als Messgerät, um Charakteristika der Mechanik zu ermitteln.

Alternativ oder zusätzlich kann das von dem Motor an die Mechanik abgegebene Drehmoment auch direkt gemessen werden, beispielsweise mit einem Drehmomentaufnehmer, mittels Dehnungsmessstreifen oder mittels optischer Encoder, die die Torsion einer Welle erfassen.

Gemäß einer weiteren vorteilhaften Ausführungsform wird die Winkelbeschleunigung des Motors anhand einer Beschleunigung (a) einer translatorischen oder linearen Bewegung der Mechanik berechnet, insbesondere durch eine Multiplikation der Beschleunigung (a) mit $2*\pi$ und einer anschließenden Division durch eine Vorschubkonstante ($K_V$). Für die Winkelbeschleunigung des Motors gilt also:

$$(4) \qquad \alpha = 2\pi * a \, / \, K_V$$

Die Ermittlung der Winkelbeschleunigung aus einer translatorischen bzw. linearen Bewegung kann dann vorteilhaft sein, wenn die Mechanik eine von dem Motor angetriebene Komponente umfasst, die eine solche Bewegung ausführt. Hierbei kann beispielsweise durch Inkrementalgeber die Geschwindigkeit bzw. Beschleunigung der translatorischen bzw. linearen Bewegung ermittelt werden.

Gemäß einer vorteilhaften Ausführungsform umfasst die Reibung ($M_{mech}$) der Mechanik eine statische Reibung ($M_{zusatz}$). Die statische Reibung ist dabei im Wesentlichen unabhängig von einer momentanen Drehfrequenz des Motors oder einer momentanen Winkelbeschleunigung des Motors. Insbesondere umfasst die Reibung der Mechanik nur eine statische Reibung oder zur Ermittlung der Reibung der Mechanik wird davon ausgegangen, dass die Reibung der Mechanik ausschließlich eine statische Reibung ist.

Gemäß einer weiteren vorteilhaften Ausführungsform umfasst die Reibung der Mechanik eine viskose Reibung ($M_{visk}$), die von einer Drehgeschwindigkeit ($\omega$) des Motors abhängt. Dies bedeutet, der Berechnung der Reibung der Mechanik kann sowohl eine statische Reibung ($M_{zusatz}$) als auch eine viskose Reibung ($M_{visk}$) zugrunde gelegt werden. Die mechanische Reibung kann sich also nach der Formel

$$(5) \qquad M_{mech} = M_{visk} * \omega + M_{zusatz}$$

berechnen. Die Drehgeschwindigkeit ($\omega$) des Motors kann auch als Winkelgeschwindigkeit des Motors bezeichnet werden.

Eingesetzt in die obige Formel (1) ergibt sich somit die Formel

$$(6) \quad M = J * \alpha + M_{visk} * \omega + M_{zusatz}$$

Wird von der vorstehenden Formel (6) ausgegangen, so muss zusätzlich zu dem von dem Motor an die Mechanik abgegebenen Drehmoment (M) und der Winkelbeschleunigung ($\alpha$) des Motors auch die Drehgeschwindigkeit ($\omega$) des Motors ermittelt werden.

Beispielsweise können drei Sätze aus Drehmoment (M), Winkelbeschleunigung ($\alpha$) und Drehgeschwindigkeit ($\omega$) zu drei unterschiedlichen Betriebszuständen ermittelt werden. Aus den so ermittelten Werten können dann wiederum das Trägheitsmoment (J) der Mechanik und die statische Reibung ($M_{zusatz}$) sowie die viskose Reibung ($M_{visk}$) der Mechanik ermittelt werden. Hierzu kann beispielsweise ein Gleichungssystem aus drei Gleichungen und mit drei Unbekannten aufgestellt werden. Anhand der drei Sätze von ermittelten Werten kann dieses Gleichungssystem gelöst werden.

Alternativ oder zusätzlich können auch eine Vielzahl von Messungen durchgeführt werden, wobei jeweils das von dem Motor an die Mechanik abgegebene Drehmoment, die Winkelbeschleunigung des Motors und die Drehfrequenz des Motors als jeweils zusammengehörige (Mess-)Werte ermittelt werden. Diese Werte können dann in einem dreidimensionalen Koordinatensystem ($\alpha$, $\omega$, M-Koordinatensystem) angetragen werden. Mittels einer Regressionsanalyse kann in die so entstehende Punktwolke aus Werten eine Ebene gelegt werden, wobei anhand der Ebenengleichung das Trägheitsmoment (J) der Mechanik, die statische Reibung ($M_{zusatz}$) und die viskose Reibung ($M_{visk}$) bekannt sind.

Gemäß einer weiteren vorteilhaften Ausführungsform werden das Trägheitsmoment der Mechanik und/oder die Reibung der Mechanik wiederholt neu ermittelt.

Aufgrund des ermittelten Trägheitsmoments der Mechanik und/oder der ermittelten Reibung der Mechanik wird bevorzugt eine Ansteuerung des Motors angepasst. Beispielsweise kann ein maximal zulässiger Strom des Motors erhöht oder erniedrigt werden, um an die Gegebenheiten der Mechanik angepasst zu werden. Ebenfalls können Parameter eines Regelkreises für den Motor verändert werden. Eine Ermittlung des Trägheitsmoments der Mechanik und/oder der Reibung der Mechanik kann insbesondere zyklisch vorgenommen werden.

Gemäß einer vorteilhaften Ausführungsform werden das Trägheitsmoment der Mechanik und/oder die Reibung der Mechanik zumindest alle 10 Sekunden, bevorzugt zumindest jede Sekunde, neu ermittelt. Insbesondere kann die Ermittlung jeweils nur wenige Millisekunden benötigen. Die Ermittlung kann insbesondere dann vorgenommen werden, wenn ein Betriebszustand des Motors verändert wird, indem beispielsweise eine Rampe (oder ein beliebiges anderes Format) gefahren wird.

Gemäß einer vorteilhaften Ausführungsform wird eine Steuerung des Motors an das berechnete Trägheitsmoment der Mechanik und/oder die berechnete Reibung der Mechanik angepasst, insbesondere (wie bereits ausgeführt) durch eine Anpassung von Regelparametern. Die berechneten Werte können also dazu dienen, eine verbesserte oder geeignetere Ansteuerung des Motors zu erreichen.

Es wird ein Warnsignal aufgrund des berechneten Trägheitsmoments der Mechanik und/oder aufgrund der berechneten Reibung der Mechanik erzeugt, welches das Bevorstehen einer Wartung der Mechanik ankündigt.

Für die Reibung der Mechanik (und hierbei auch für die statische und/oder viskose Reibung) wird ein Schwellenwert vorgegeben. Sobald dieser Schwellenwert überschritten wird, wird das Warnsignal ausgegeben, um eine prädiktive Wartung der Mechanik bzw. eine Überprüfung der Mechanik vorzunehmen. Hierbei ist von Vorteil, dass aufgrund des Warnsignals Fehler in der Maschine bzw. in der Mechanik frühzeitig erkannt werden können und eine Überlastung des Motors, beispielsweise durch das Einprägen eines zu hohen Stroms, vermieden werden kann.

Weiterhin betrifft die Erfindung eine Maschine gemäß Anspruch 8. Insbesondere umfasst die Maschine eine Steuereinheit, die den Motor ansteuert und das Trägheitsmoment der Mechanik sowie die Reibung der Mechanik berechnet. Gemäß einer vorteilhaften Ausführungsform der Maschine ist der Motor ein Elektromotor und insbesondere ein Servomotor mit einem Getriebe und einem Drehgeber. Mittels des Drehgebers kann sowohl die Drehgeschwindigkeit ($\omega$) als auch die Winkelbeschleunigung ($\alpha$) des Motors gemessen werden. Sowohl eine Drehmomentkonstante ($K_M$) des Motors als auch ein Getriebefaktor (i) des Getriebes können hierzu bekannt sein. Insbesondere sind die Drehmomentkonstante ($K_M$) des Motors und/oder der Getriebefaktor (i) konstant.

Gemäß einer weiteren vorteilhaften Ausführungsform umfasst die Maschine eine Messeinrichtung, welche ein von dem Motor an die Mechanik abgegebenes Drehmoment (M) direkt misst und/oder einen vom Motor aufgenommenen Strom (I) und/oder eine Leistung des Motors und/oder eine Drehgeschwindigkeit ($\omega$) des Motors und/oder eine Winkelbeschleunigung ($\alpha$) des Motors ermittelt.

Weiter bevorzugt umfasst die Maschine eine Messeinrichtung, welche eine Beschleunigung der Mechanik ermittelt. Bei der Beschleunigung der Mechanik kann es sich insbesondere um eine Beschleunigung einer translatorischen oder linearen Bewegung handeln. Diese translatorische Bewegung kann mittels einer Vorschubkonstante ($K_V$) in eine Winkelbeschleunigung des Motors umgerechnet werden.

Die Vorschubkonstante ($K_V$) gibt insbesondere an, wie groß eine translatorische oder lineare Bewegung der Mechanik ist, die pro Umdrehung des Motors erfolgt.

Gemäß einer weiteren vorteilhaften Ausführungsform handelt es sich bei der Mechanik um ein Förderband. Das Förderband kann eine translatorische Bewegung ausführen und beispielsweise Gegenstände in einem Fertigungsprozess in einer Industrieanlage transportieren. Schleifen beispielsweise die transportierten Gegenstände an einer Begrenzung des Förderbands, so wird die Reibung der Mechanik erhöht, was festgestellt werden kann. Aufgrund des Wissens über die erhöhte Reibung kann dann die Ursache der erhöhten Reibung beseitigt werden.

Die zu dem erfindungsgemäßen Verfahren getroffenen Aussagen gelten für die erfindungsgemäße Maschine entsprechend, insbesondere hinsichtlich Vorteilen und bevorzugten Ausführungsformen.

Bei der Mechanik kann es sich grundsätzlich um beliebige von einem Motor angetriebene oder bewegte Teile handeln. Beispielsweise kann die Mechanik einen Roboterarm, einen Greifer, das bereits genannte Förderband und/oder ein Antriebsrad eines Fahrzeugs und dergleichen umfassen.

Nachfolgend wird die Erfindung rein beispielhaft unter Bezugnahme auf die Zeichnungen beschrieben. Es zeigen:

Fig. 1    den schematischen Aufbau einer Maschine;

Fig. 2    eine Regressionsanalyse in einem zweidimensionalen Koordinatensystem; und

Fig. 3    eine Regressionsanalyse in einem dreidimensionalen Koordinatensystem.

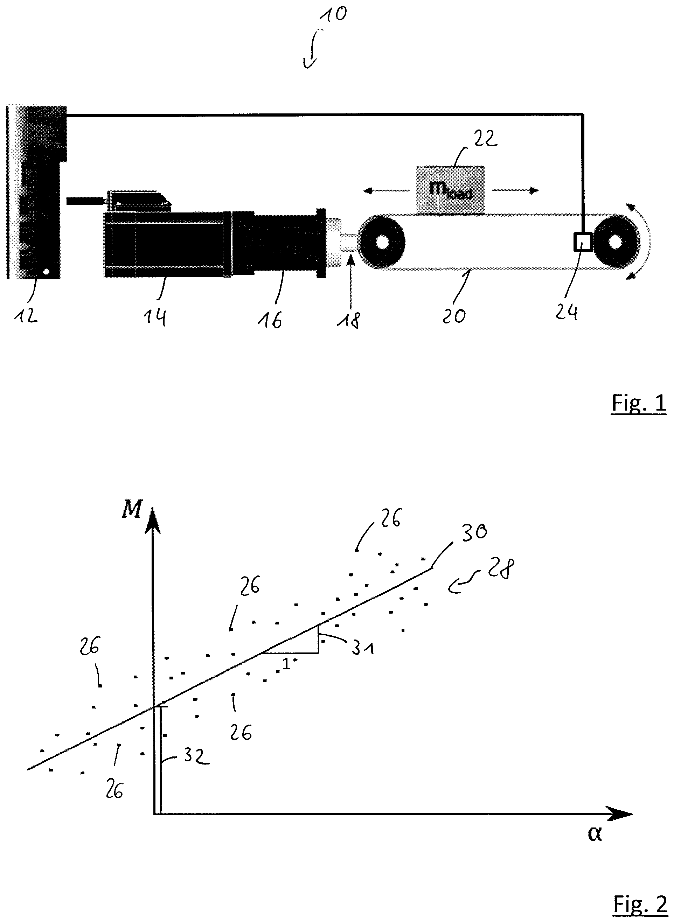

Fig. 1 zeigt eine Maschine 10, welche eine Motorsteuerung 12 und einen mit der Motorsteuerung 12 elektrisch verbundenen Servomotor 14 umfasst. Der Servomotor 14 treibt über ein Getriebe 16 mittels einer drehbaren Welle 18 eine Mechanik in Form eines hier beispielhaft gewählten Förderbands 20 an. Mit dem Förderband 20 kann eine Last 22 bewegt werden.

An dem Förderband 20 ist ein Bewegungssensor 24 angebracht, der mit der Motorsteuerung 12 verbunden ist. Der Bewegungssensor 24 bestimmt eine Geschwindigkeit und eine Beschleunigung des Förderbands 20 und übermittelt diese Werte der Motorsteuerung 12.

Die Motorsteuerung 12 berechnet mit Hilfe einer Vorschubkonstante $K_V$ aus der Beschleunigung des Förderbands 20 eine Winkelbeschleunigung $\alpha$ des Servomotors 14. Zudem ermittelt die Motorsteuerung 12 aus einem von dem Servomotor 14 aufgenommenen Strom und einer Drehmomentkonstante $K_M$ des Motors ein von dem Motor an die Mechanik abgegebenes Drehmoment M. Das abgegebene Drehmoment M wird mittels der Welle 18 an das Förderband 20 übertragen.

Die Motorsteuerung 12 ermittelt das abgegebene Drehmoment M und die Winkelbeschleunigung $\alpha$ in verschiedenen Betriebssituationen (d.h. Betriebszuständen) der Maschine 10 und trägt das Drehmoment M gegenüber der zugehörigen Winkelbeschleunigung $\alpha$ als erste Messwerte 26 in ein zweidimensionales Koordinatensystem ein, wie dies in Fig. 2 gezeigt ist. In dem zweidimensionalen Koordinatensystem von Fig. 2 ist auf der Abszisse die Winkelbeschleunigung $\alpha$ und auf der Ordinate das abgegebene Drehmoment M angetragen.

Die ersten Messwerte 26 formen eine erste Punktwolke 28, in welche mittels einer Regressionsanalyse von der Motorsteuerung 12 eine Gerade 30 hineingelegt wird. Von der Gerade 30 wird eine erste Steigung 31 und ein Achsenabschnitt 32 ermittelt. Die erste Steigung 31 ist als Steigungsdreieck dargestellt, wobei die erste Steigung 31 dem Trägheitsmoment J der Mechanik, das heißt dem Trägheitsmoment J des Förderbands 20, entspricht. Der Achsenabschnitt 32 entspricht einer statischen Reibung $M_{zusatz}$ der Mechanik.

Anhand des so ermittelten Trägheitsmoments J der Mechanik und der Reibung der Mechanik $M_{mech}$ kann die Motorsteuerung 12 Regelparameter für die Ansteuerung des Servomotors 14 entsprechend verändern. Übersteigt die Reibung der Mechanik einen vorbestimmten Schwellenwert, so kann ein Warnsignal ausgegeben werden, das zu einer Wartung des Förderbands 20 führen kann.

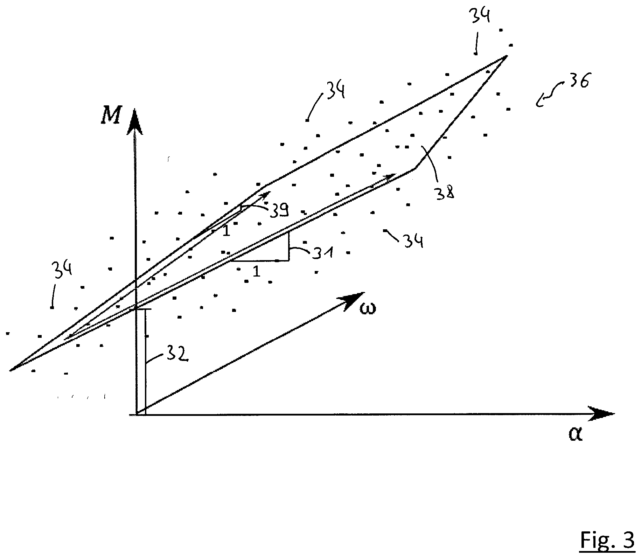

Um auch eine viskose Reibung des Förderbands 20 zu berücksichtigen, kann wie in Fig. 3 dargestellt, zusätzlich auch eine Drehgeschwindigkeit $\omega$ des Motors berücksichtigt werden. Die Drehgeschwindigkeit $\omega$ des Motors kann anhand einer Geschwindigkeit v des Förderbands 20 über die Vorschubkonstante $K_V$ ermittelt werden. Die Drehgeschwindigkeit $\omega$ entspricht dabei der Geschwindigkeit v multipliziert mit $2\pi$ dividiert durch die Vorschubkonstante $K_V$.

Zusammengehörige Messwerte von Drehgeschwindigkeit $\omega$ des Servomotors 14, Winkelbeschleunigung $\alpha$ des Servomotors 14 und von dem Servomotor 14 an das Förderband 20 abgegebenem Drehmoment M können dann in ein dreidimensionales kartesisches Koordinatensystem (Fig. 3) eingetragen werden, in welchem die senkrecht aufeinander stehenden Achsen die Winkelbeschleunigung $\alpha$, die Drehgeschwindigkeit $\omega$ und das abgegebene Drehmoment M repräsentieren.

Die gemessenen Werte können jeweils als zweite Messwerte 34 in dem dreidimensionalen Koordinatensystem eingetragen sein und eine zweite Punktwolke 36 bilden. Die zweite Punktwolke 36 kann von der Motorsteuerung 12 einer Regressionsanalyse unterzogen werden, um eine Ebene 38 in die zweite Punktwolke 36 einzubeschreiben. Durch die Ebene 38 kann dann die erste Steigung 31 in Richtung der Winkelbeschleunigung $\alpha$ ermittelt werden. Die erste Steigung 31 entspricht dem Trägheitsmoment J des Förderbands 20. Eine zweite Steigung 39 in Richtung der Drehgeschwindigkeit $\omega$ entspricht der viskosen Reibung $M_{visk}$ des Förderbands 20. Ein Abstand des Schnittpunktes der Ebene 38 mit der das Drehmoment M repräsentierenden Achse von dem Ursprung des dreidimensionalen Koordinatensystems (der dem Achsenabschnitt 32 entspricht) gibt die statische Reibung $M_{zusatz}$ des Förderbands 20 an.

Im Betrieb der Maschine 10 kann die Motorsteuerung 12 beim regulären Betrieb der Maschine 10 die ersten und/oder zweiten Messwerte 26, 34 erzeugen und auf die erläuterte Art und Weise auswerten. Die bei der Auswertung ermittelten Werte für das Trägheitsmoment J der Mechanik, für die statische Reibung $M_{zusatz}$ und die viskose Reibung $M_{visk}$ können dann verwendet werden, um eine Ansteuerung des Servomotors 14 anzupassen und/oder mittels eines Warnsignals auf Auffälligkeiten oder Verschleiß bei dem Förderband 20 hinzuweisen.

**Bezugszeichenliste**

10 Maschine
12 Motorsteuerung
14 Servomotor
16 Getriebe
18 Welle
20 Förderband
22 Last
24 Bewegungssensor
26 erste Messwerte
28 erste Punktwolke
30 Gerade
31 erste Steigung
32 Achsenabschnitt
34 zweite Messwerte
36 zweite Punktwolke
38 Ebene
39 zweite Steigung

$\alpha$ Winkelbeschleunigung
$\omega$ Drehgeschwindigkeit
M Drehmoment

**Patentansprüche**

1. Verfahren zur Überwachung einer Maschine (10), bei welcher ein Motor (14) eine Mechanik (20) antreibt, wobei

   - ein von dem Motor (14) an die Mechanik (20) abgegebenes Drehmoment (M) direkt gemessen wird und
   - eine Winkelbeschleunigung ($\alpha$) des Motors (14) ermittelt wird,
   wobei in zumindest zwei verschiedenen Betriebszuständen
   - das jeweils von dem Motor (14) an die Mechanik (20) abgegebene Drehmoment (M) direkt gemessen wird,
   - die jeweilige Winkelbeschleunigung ($\alpha$) des Motors (14) ermittelt wird, und
   - anhand des direkt gemessenen Drehmoments M und der ermittelten Winkelbeschleunigung $\alpha$ ein Trägheitsmoment J der Mechanik (20) und eine Reibung $M_{mech}$ der Mechanik (20) anhand der Formel $M = J*\alpha + M_{mech}$ berechnet werden,

   wobei

   bei einer Veränderung des Trägheitsmoments J der Mechanik (20) oder der Reibung $M_{mech}$, welche über einen vorbestimmten Schwellenwert hinausgeht, ein Warnsignal ausgegeben wird, und
   das Trägheitsmoment (J) der Mechanik (20) und/oder die Reibung ($M_{mech}$) der Mechanik (20) anhand einer Regressionsanalyse ermittelt werden.

2. Verfahren nach Anspruch 1,
   **dadurch gekennzeichnet , dass**
   in einer Vielzahl beliebiger verschiedener Betriebszustände das jeweils von dem Motor (14) an die Mechanik (20) abgegebene Drehmoment (M) direkt gemessen und die jeweilige Winkelbeschleunigung ($\alpha$) des Motors (14) ermittelt werden.

3. Verfahren nach zumindest einem der vorstehenden Ansprüche,
   **dadurch gekennzeichnet, dass**
   die Winkelbeschleunigung ($\alpha$) des Motors (14) anhand einer Beschleunigung (a) einer translatorischen Bewegung der Mechanik (20) berechnet wird, insbesondere durch eine Multiplikation der Beschleunigung (a) mit $2*\pi$ und einer anschließenden Division durch eine Vorschubkonstante ($K_V$).

4. Verfahren nach zumindest einem der vorstehenden Ansprüche,
   **dadurch gekennzeichnet, dass**
   die Reibung ($M_{mech}$) der Mechanik eine statische Reibung ($M_{zusatz}$) umfasst.

5. Verfahren nach zumindest einem der vorstehenden Ansprüche,
   **dadurch gekennzeichnet, dass**
   die Reibung ($M_{mech}$) der Mechanik (20) eine viskose Reibung ($M_{visk}$) umfasst, die von einer Drehgeschwindigkeit ($\omega$) des Motors (14) abhängt.

6. Verfahren nach zumindest einem der vorstehenden Ansprüche,
   **dadurch gekennzeichnet, dass**
   das Trägheitsmoment (J) der Mechanik (20) und/oder die Reibung ($M_{mech}$) der Mechanik (20) wiederholt neu ermittelt werden und eine Ansteuerung des Motors (14) aufgrund des ermittelten Trägheitsmoments (J) der Mechanik (20) und/oder der Reibung ($M_{mech}$) der Mechanik (20) angepasst wird.

**7.** Verfahren nach Anspruch 6,
**dadurch gekennzeichnet , dass**
das Trägheitsmoment (J) der Mechanik (20) und/oder die Reibung ($M_{mech}$) der Mechanik zumindest alle 10 Sekunden, bevorzugt jede Sekunde, neu ermittelt werden.

**8.** Maschine (10) mit einem Motor (14) und einer von dem Motor (14) angetriebenen Mechanik (20), wobei

die Maschine (10) ausgebildet ist,

- ein von dem Motor (14) an die Mechanik (20) abgegebenes Drehmoment (M) direkt zu messen und
- eine Winkelbeschleunigung ($\alpha$) des Motors (14) zu ermitteln, wobei die Maschine (10) ferner ausgebildet ist, in zumindest zwei verschiedenen Betriebszuständen
- das jeweils von dem Motor (14) an die Mechanik (20) abgegebene Drehmoment (M) direkt zu messen und
- die jeweilige Winkelbeschleunigung ($\alpha$) des Motors (14) zu ermitteln,

wobei die Maschine (10) ausgebildet ist, anhand des direkt gemessenen Drehmoments M und der ermittelten Winkelbeschleunigung $\alpha$ ein Trägheitsmoment J der Mechanik (20) und eine Reibung $M_{mech}$ der Mechanik (20) anhand der Formel $M = J{*}\alpha + M_{mech}$ zu berechnen, wobei
die Maschine (10) ausgebildet ist, bei einer Veränderung des Trägheitsmoments J der Mechanik (20) oder der Reibung $M_{mech}$, welche über einen vorbestimmten Schwellenwert hinausgeht, ein Warnsignal auszugeben, wobei die Maschine (10) ausgebildet ist, das Trägheitsmoment (J) der Mechanik (20) und/oder die Reibung ($M_{mech}$) der Mechanik (20) anhand einer Regressionsanalyse zu ermitteln.

**9.** Maschine (10) nach Anspruch 8,
**dadurch gekennzeichnet , dass**
der Motor ein Elektromotor und insbesondere ein Servomotor (14) mit einem Getriebe (16) und einem Drehgeber ist.

**10.** Maschine (10) nach Anspruch 8 oder 9,
**gekennzeichnet durch**
Messeinrichtungen (12, 24), welche ein von dem Motor (14) an die Mechanik (20) abgegebenes Drehmoment (M) direkt messen und/oder einen vom Motor (14) aufgenommenen Strom (I) und/oder eine Leistung des Motors (14) und/oder eine Drehgeschwindigkeit ($\omega$) des Motors (14) und/oder eine Winkelbeschleunigung ($\alpha$) des Motors (14) ermitteln.

**11.** Maschine (10) nach einem der Ansprüche 8 bis 10,
**gekennzeichnet durch**
eine Messeinrichtung (24), welche eine Beschleunigung (a) der Mechanik (20) ermittelt.

**12.** Maschine (10) nach einem der Ansprüche 8 bis 11,
**dadurch gekennzeichnet, dass**
die Mechanik ein Förderband (20) ist.

**Claims**

**1.** A method for monitoring a machine (10) in which a motor (14) drives a mechanism (20), wherein

- a torque (M) delivered by the motor (14) to the mechanism (20) is measured directly, and
- an angular acceleration ($\alpha$) of the motor (14) is determined, wherein, in at least two different operating states,
- the torque (M) which is in each case delivered by the motor (14) to the mechanism (20) is measured directly,
- the respective angular acceleration ($\alpha$) of the motor (14) is determined, and
- a moment of inertia J of the mechanism (20) and a friction $M_{mech}$ of the mechanism (20) are calculated based on the directly measured torque M and the determined angular acceleration $\alpha$ using the formula

$$M = J{*}\alpha + M_{mech},$$

wherein,

in the event of a change in the moment of inertia J of the mechanism (20) or in the friction $M_{mech}$, which exceeds a predetermined threshold value, a warning signal is output, and the moment of inertia (J) of the mechanism (20) and/or the friction ($M_{mech}$) of the mechanism (20) is/are determined using a regression analysis.

**2.** A method according to claim 1,
**characterized in that**,
in a plurality of arbitrary different operating states, the torque (M) which is in each case delivered by the motor (14) to the mechanism (20) is measured directly and the respective angular acceleration ($\alpha$) of the motor (14) is determined.

**3.** A method according to at least one of the preceding claims,
**characterized in that**

the angular acceleration ($\alpha$) of the motor (14) is calculated based on an acceleration (a) of a translatory movement of the mechanism (20), in particular by a multiplication of the acceleration (a) by $2*\pi$ and a subsequent division by a feed constant ($K_V$).

4. A method according to at least one of the preceding claims,
**characterized in that**
the friction ($M_{mech}$) of the mechanism comprises a static friction ($M_{add}$).

5. A method according to at least one of the preceding claims,
**characterized in that**
the friction ($M_{mech}$) of the mechanism (20) comprises a viscous friction ($M_{visc}$) which depends on a rotational speed ($\omega$) of the motor (14).

6. A method according to at least one of the preceding claims,
**characterized in that**
the moment of inertia (J) of the mechanism (20) and/or the friction ($M_{mech}$) of the mechanism (20) is/are repeatedly redetermined and a control of the motor (14) is adapted based on the determined moment of inertia (J) of the mechanism (20) and/or the friction ($M_{mech}$) of the mechanism (20).

7. A method according to claim 6,
**characterized in that**
the moment of inertia (J) of the mechanism (20) and/or the friction ($M_{mech}$) of the mechanism is/are redetermined at least every 10 seconds, preferably every second.

8. A machine (10) comprising a motor (14) and a mechanism (20) driven by the motor (14),
wherein

the machine (10) is configured

- to directly measure a torque (M) delivered by the motor (14) to the mechanism (20) and
- to determine an angular acceleration ($\alpha$) of the motor,

wherein the machine (10) is further configured, in at least two different operating states,

- to directly measure the torque (M) which is in each case delivered by the motor (14) to the mechanism (20) and
- to determine the respective angular acceleration ($\alpha$) of the motor (14), wherein the machine (10) is configured to calculate a moment of inertia J of the mechanism (20) and a friction $M_{mech}$ of the mechanism (20) based on the directly measured torque M and the determined angular acceleration $\alpha$ using the formula $M = J*\alpha + M_{mech}$,

wherein
the machine (10) is configured, in the event of a change in the moment of inertia J of the mechanism (20) or in the friction $M_{mech}$, which exceeds a predetermined threshold value, to output a warning signal, wherein the machine (10) is configured to determine the moment of inertia (J) of the mechanism (20) and/or the friction ($M_{mech}$) of the mechanism (20) using a regression analysis.

9. A machine (10) according to claim 8,
**characterized in that**
the motor is an electric motor and in particular a servomotor (14) comprising a gear (16) and a rotary encoder.

10. A machine (10) according to claim 8 or 9,
**characterized by**
measurement devices (12, 24) which directly measure a torque (M) delivered by the motor (14) to the mechanism (20) and/or determine a current (I) consumed by the motor (14) and/or a power of the motor (14) and/or a rotational speed ($\omega$) of the motor (14) and/or an angular acceleration ($\alpha$) of the motor (14).

11. A machine (10) according to any one of the claims 8 to 10,
**characterized by**
a measurement device (24) which determines an acceleration (a) of the mechanism (20).

12. A machine (10) according to any one of the claims 8 to 11,
**characterized in that**
the mechanism is a conveyor belt (20).

**Revendications**

1. Procédé de surveillance d'une machine (10) dans laquelle un moteur (14) entraîne un mécanisme (20), dans lequel

- un couple de rotation (M) délivré par le moteur (14) au mécanisme (20) est mesuré directement, et
- une accélération angulaire ($\alpha$) du moteur (14) est déterminée,
sachant que, dans au moins deux états de fonctionnement différents,
- le couple de rotation (M) respectif délivré par le moteur (14) au mécanisme (20) est mesuré directement,

- l'accélération angulaire (α) respective du moteur (14) est déterminée, et
- à partir du couple de rotation M mesuré directement et de l'accélération angulaire α déterminée, un moment d'inertie J du mécanisme (20) et un frottement $M_{mech}$ du mécanisme (20) sont calculés à l'aide de la formule

$$M = J*a + M_{mech},$$

un signal d'avertissement est émis en cas de modification du moment d'inertie J du mécanisme (20) ou du frottement $M_{mech}$ qui dépasse une valeur seuil prédéterminée, et le moment d'inertie (J) du mécanisme (20) et/ou le frottement ($M_{mech}$) du mécanisme (20) sont déterminés à l'aide d'une analyse de régression.

2. Procédé selon la revendication 1, **caractérisé en ce que**, dans une pluralité d'états de fonctionnement différents quelconques, le couple de rotation (M) respectif délivré par le moteur (14) au mécanisme (20) est mesuré directement, et l'accélération angulaire (α) respective du moteur (14) est déterminée.

3. Procédé selon l'une au moins des revendications précédentes, **caractérisé en ce que** l'accélération angulaire (α) du moteur (14) est calculée à partir d'une accélération (a) d'un mouvement de translation du mécanisme (20), en particulier par multiplication de l'accélération (a) par 2*π, puis par division par une constante d'avance ($K_V$).

4. Procédé selon l'une au moins des revendications précédentes, **caractérisé en ce que** le frottement ($M_{mech}$) du mécanisme comprend un frottement statique ($M_{suppl}$).

5. Procédé selon l'une au moins des revendications précédentes, **caractérisé en ce que** le frottement ($M_{mech}$) du mécanisme (20) comprend un frottement visqueux ($M_{visc}$) qui dépend d'une vitesse de rotation (ω) du moteur (14).

6. Procédé selon l'une au moins des revendications précédentes, **caractérisé en ce que** le moment d'inertie (J) du mécanisme (20) et/ou le frottement ($M_{mech}$) du mécanisme (20) sont redéterminés de manière répétée, et une commande du moteur (14) est adaptée sur la base du moment d'inertie (J) déterminé du mécanisme (20) et/ou du frottement ($M_{mech}$) du mécanisme (20).

7. Procédé selon la revendication 6, **caractérisé en ce que** le moment d'inertie (J) du mécanisme (20) et/ou le frottement ($M_{mech}$) du mécanisme sont redéterminés au moins toutes les 10 secondes, de préférence toutes les secondes.

8. Machine (10) comprenant un moteur (14) et un mécanisme (20) entraîné par le moteur (14),

   la machine (10) étant conçue pour

   - mesurer directement un couple de rotation (M) délivré par le moteur (14) au mécanisme (20) et
   - déterminer une accélération angulaire (α) du moteur (14),

   la machine (10) étant en outre conçue pour, dans au moins deux états de fonctionnement différents,

   - mesurer directement le couple de rotation (M) respectif délivré par le moteur (14) au mécanisme (20) et
   - déterminer l'accélération angulaire (α) respective du moteur (14),

   la machine (10) étant conçue pour calculer, à partir du couple de rotation M mesuré directement et de l'accélération angulaire α déterminée, un moment d'inertie J du mécanisme (20) et un frottement $M_{mech}$ du mécanisme (20) à l'aide de la formule M = J*α + $M_{mech}$, la machine (10) étant conçue pour émettre un signal d'avertissement en cas de modification du moment d'inertie J du mécanisme (20) ou du frottement $M_{mech}$ qui dépasse une valeur seuil prédéterminée, la machine (10) étant conçue pour déterminer le moment d'inertie (J) du mécanisme (20) et/ou le frottement ($M_{mech}$) du mécanisme (20) à l'aide d'une analyse de régression.

9. Machine (10) selon la revendication 8, **caractérisée en ce que** le moteur est un moteur électrique et en particulier un servomoteur (14) muni d'un réducteur (16) et d'un codeur rotatif.

10. Machine (10) selon la revendication 8 ou 9, **caractérisée par** des dispositifs de mesure (12, 24) qui mesurent directement un couple de rotation (M) délivré par le moteur (14) au mécanisme (20) et/ou qui déterminent un courant (I) absorbé par le moteur (14) et/ou une puissance du moteur (14) et/ou une vitesse de rotation (ω) du moteur (14) et/ou une accélération angulaire (α) du moteur (14).

11. Machine (10) selon l'une des revendications 8 à 10,

**caractérisée par** un dispositif de mesure (24) qui détermine une accélération (a) du mécanisme (20).

12. Machine (10) selon l'une des revendications 8 à 11, **caractérisée en ce que** le mécanisme est un convoyeur à bande (20).

Fig. 1

Fig. 2

<u>Fig. 3</u>

**EP 3 258 331 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011121839 A1
- DE 4111530 A1
- WO 2013158849 A1
- EP 0031906 A2